# EUROPÄISCHE PATENTANMELDUNG

(11) **EP 2 851 736 A1**
(43) Veröffentlichungstag der Anmeldung: **25.03.2015**
(21) Anmeldenummer: 14176089.2
(22) Anmeldetag: 08.07.2014
(51) Int. Cl.: G02C 5/16, G02C 5/14, G02C 11/02

(54) **Brillenbügel**

(30) Priorität: 23.09.2013 DE 202013104337 U
(71) Anmelder: Wied, Günther, 94036 Passau (DE); Trauth, Thomas, 73547 Lorch (DE)
(72) Erfinder: Wied, Günther, 94036 Passau (DE); Trauth, Thomas, 73547 Lorch (DE)
(74) Vertreter: Graf Glück Kritzenberger

(57) **Zusammenfassung**

Die Erfindung betrifft einen Brillenbügel (1) zur auswechselbaren Aufnahme von Schmuckelementen (14) aufweisend wenigstens ein Schmuckelement (14), zumindest ein das wenigstens eine Schmuckelement (14) aufnehmendes Bügelelement (2) und ein auf das Bügelelement (2) aufsteckbares Bügelendstück (4). Besonders vorteilhaft ist das Bügelelement (2) pinzettenartig ausgebildet und weist einen ersten und zweiten Schenkel (2.1, 2.2) auf. Die Schenkel (2.1, 2.2) stehen in einem Verbindungsbereich (2') freiendseitig, federnd miteinander in Verbindung und weisen jeweils ein dem Verbindungsbereich (2') gegenüberliegendes, freies Schenkelende (5, 6) auf, wobei das wenigstens eine Schmuckelement (14) zwischen dem ersten und zweiten Schenkeln (2.1, 2.2) auswechselbar aufgenommen ist, und zwar durch Einklemmen des wenigstens einen Schmuckelementes (14) zwischen dem ersten und zweiten Schenkel (2.1, 2.2) des pinzettenartigen Bügelelementes (2) durch Zusammenpressen der freien Schenkelenden (5, 6) und Aufstecken des Bügelendstückes (4) auf die beiden freien Schenkelenden (5, 6) der zusammengepressten Schenkel (2.1, 2.2).

## Beschreibung

Die Erfindung betrifft einen Brillenbügel zur Aufnahme auswechselbarer Schmuckelemente gemäß dem Oberbegriff des Patentanspruches 1.

Verschiedenste Ausführungsformen von Brillengestellen, welche üblicherweise aus zwei Brillenbügeln und einem Brillenrahmen zur haltenden Aufnahme der Brillengläser bestehen, sind hinreichend aus dem Stand der Technik bekannt.

Brillenträger wünschen in zunehmendem Maße Brillengestelle, deren optischer Eindruck veränderbar ist und somit in Farbe und Design wechselbar mit dem modischen Gesamt-Outfit variiert werden kann. Besonders beliebt sind dabei Brillengestelle, bei denen bestimmte Teile des Gestells ausgetauscht oder kombiniert werden können. Es gibt mittlerweile zahlreiche Brillengestellen mit auswechselbaren Teilen, insbesondere Brillenbügeln. Obwohl auf dem Markt eine Vielzahl unterschiedliche Designs aufweisende Brillenbügel erhältlich sind, geht der Trend jedoch eindeutig zur weiteren Individualisierung dieser.

Beispielsweise beschreibt die DE 20 2011 004 795 U1 einen Brillenbügel, bei dem das Ende eines Brillenbügels abnehmbar ist, um so Dekorelemente auf den Brillenbügel aufstecken zu können. Zwar erlaubt der in der DE 20 2011 004 795 U1 offenbarte Brillenbügel ein leichtes Auswechseln von Dekorelementen, jedoch sind in erster Linie nur Dekorelemente aufsteckbar, welche zumindest teilringförmig ausgebildet sind und den Brillenbügel vollständig umgeben. Die Verwendung von Schmucksteinen oder dergleichen Dekorelementen ist bei den beschriebenen Brillenbügeln nicht möglich.

Die DE 20 2010 016 675 U1 offenbart beispielsweise einen Brillenbügel mit einem schwenkbaren Bügelanschlag und einem Bügelende, bei dem in Längsrichtung des Brillenbügels ein Schlitz vorgesehen ist, wobei der Schlitz an seinem dem Bügelanschlag zugewandten Ende offen ausgebildet ist. Dekorelemente können in den Schlitz eingeschoben werden. Nachteilig hierbei ist, dass der Schlitz bei eingeklapptem Brillenbügel offen ist und ein eingeschobenes Dekorelement nicht ausreichend vor einem eventuellen Herausfallen gesichert ist. Ebenso ist das Einschieben mehrerer Dekorelemente in den Schlitz und deren lokale Fixierung innerhalb des Schlitzes des Brillenbügels nicht vorgesehen.

Ausgehend hiervon liegt der Erfindung die Aufgabe zugrunde, einen Brillenbügel anzugeben, dessen optisches Erscheinungsbild durch den Brillenträger in besonders einfacher Weise individuell veränderbar ist, und zwar vorzugsweise schnell und dadurch bedienerfreundlich. Die Aufgabe wird ausgehend von den Merkmalen des Oberbegriffes des Patentanspruches 1 durch dessen kennzeichnende Merkmale gelöst.

Die Erfindung betrifft einen Brillenbügel zur auswechselbaren Aufnahme von Schmuckelementen aufweisend wenigstens ein Schmuckelement, zumindest ein das wenigstens eine Schmuckelement aufnehmendes Bügelelement und ein auf das Bügelelement aufsteckbares Bügelendstück. Vorteilhaft ist das Bügelelement pinzettenartig ausgebildet und weist einen ersten und zweiten Schenkel auf, wobei die Schenkel in einem Verbindungsbereich freiendseitig, federnd miteinander in Verbindung stehen und jeweils ein dem Verbindungsbereich gegenüberliegendes, freies Schenkelende aufweisen, wobei das wenigstens eine Schmuckelement zwischen dem ersten und zweiten Schenkeln auswechselbar aufgenommen ist, und zwar durch Einklemmen des wenigstens einen Schmuckelementes zwischen dem ersten und zweiten Schenkel des pinzettenartigen Bügelelementes durch Zusammenpressen der freien Schenkelenden und Aufstecken des Bügelendstückes auf die beiden freien Schenkelenden der zusammengepressten Schenkel. Aufgrund der pinzettenartigen Ausbildung des Bügelelementes kann zumindest ein Schmuckelement besonders einfach zwischen die beiden Schenkel eingeschoben werden. Durch leichten Druck auf die beiden Schenkel - wie gewöhnlich zum Schließen einer Pinzette ausgeübt und nachfolgend leichter Schließdruck genannt- kann das Schmuckelement zwischen den Schenkeln eingeklemmt und somit fixiert werden. Unter weiterer Einwirkung des leichten Schließdruckes wird das Bügelendstück von den freien Schenkelenden her auf das Bügelelement aufgesteckt. Besonders vorteilhaft können dadurch die freien Schenkelenden und somit die Schenkel festgelegt werden und das Schmuckelement bleibt im Klemmsitz fixiert. Das Auswechseln eines Schmuckelementes durch ein anderes Schmuckelement ist dadurch auf besonders einfache und schnelle Weise möglich.

Für die Herstellung eines einstückigen, pinzettenartig ausgebildeten Bügelelementes kann beispielsweise ein aus einem Kunststoff oder aus Metall bestehendes Flachmaterial durch ein spanendes Fertigungsverfahren, zum Beispiel durch Fräsen bearbeitet werden. Durch Ausfräsen eines mittleren Bereichs des Flachmaterials können darüber zum Beispiel die beiden einseitig, federnd miteinander in Verbindung stehenden Schenkel erzeugt werden, wobei die Federwirkung in erster Linie durch die Materialeigenschaften, insbesondere zum Beispiel durch Biege-Eigenschaften des Flachmaterials zustande kommt. In alternativen Ausführungen können zur Herstellung des pinzettenartig ausgebildeten Bügelelementes auch zwei vorgefertigte Schenkel am Verbindungsbereich fest miteinander verbunden insbesondere verschweißt werden.

Gemäß einer bevorzugten Ausführungsform der vorliegenden Erfindung weisen die beiden Schenkel des pinzettenartig ausgebildeten Bügelelementes an einander zugewandten Schenkelinnenseiten jeweils wenigstens eine Ausnehmung zur Aufnahme eines Schmuckelementes auf, wobei die Ausnehmungen in den Schenkelinnenseiten einander gegenüberliegend angeordnet sind. Insbesondere bevorzugt weisen die Schenkel an ihren Schenkelinnenseiten eine Mehrzahl von sich gegenüberliegenden Ausnehmungen zur Aufnahme einer Mehrzahl von Schmuckelementen auf. Vorteilhaft kann über die Ausbildung von Ausnehmungen zur Aufnahme der Schmuckelemente der nach außen wirkende Druck auf die Schenkel von den Schenkelinnenseiten her, welcher durch die zwischen die Schenkel des pinzettenartigen Bügelelementes eingeschobenen und eingeklemmten Schmuckelemente erzeugt wird, verringert werden. Die Schenkel werden dadurch entlastet und einer ungewollten Verbiegung der Schenkel wird effektiv entgegengewirkt.

Aus den vorgesehenen Ausnehmungen in den Schenkelinnenseiten ergeben sich weitere Vorteile dadurch, dass Schmuckelemente beim Einschieben zwischen die Schenkel quasi in die Ausnehmungen einrasten können und darüber exakt sowie verschiebe- und verrutschsicher positioniert werden können. Dadurch können mehrere Schmuckelemente in einer gewünschten Anordnung bzw. Position zueinander einem Bügelelement aufgenommen sein. Je nach Form und Ausführungsart der Schmuckelemente sind die Ausnehmungen in den Schenkelinnenseiten besonders vorteilhaft im Wesentlichen rund, insbesondere halbkreisförmig oder alternativ im Wesentlichen rechteckig, insbesondere quadratisch ausgebildet.

Gemäß einer besonders bevorzugten Ausführungsform der vorliegenden Erfindung sind an den Schenkelinnenseiten der beiden Schenkel korrespondierende Eingriffsabschnitte vorgesehen, wobei die korrespondierenden Eingriffsabschnitte wenigstens abschnittsweise zum verschiebesicheren Ineinandergreifen ausgebildet sind. Zum einen wird durch die korrespondierenden, wenigstens teilweise ineinandergreifenden Eingriffsabschnitte sicher gestellt, dass die beiden Schenkel des pinzettenartig ausgebildeten Bügelelementes im Schließzustand korrekt zueinander positioniert sind und keine unnötigen und ungewollten oder gar schädigenden Zug- oder Druckkräfte auf den Verbindungsbereich der Schenkel einwirken. Vor allem beim Aufstecken des Bügelendstückes wird dadurch wirkungsvoll verhindert, dass die beiden Schenkel durch den Aufsteckvorgang in Längsrichtung des Bügelelementes gegeneinander verschoben werden.

Die korrespondierenden Eingriffsabschnitte an den Schenkelinnenseiten können beispielsweise wellenförmig, zickzackförmig oder zackenförmig ausgebildet sein. Unter wellen-, zickzack oder zackenförmig wird vorliegend auch verstanden, dass die Schenkelinnenseiten im Bereich der Eingriffsabschnitte geschwungen bzw. gewellt ausgebildet sind, wobei die Schwingungen bzw. Wellen beispielsweise eine sinuskurvenartige, eine rechteckige oder eine dreieckige Form aufweisen können, selbstverständlich immer unter der Maßgabe, dass die Eingriffsabschnitte zumindest abschnittsweise ineinandergreifen können. Alternativ dazu können die Eingriffsabschnitte auch derart ausgebildet sein, dass beispielsweise in der Schenkelinnenseite des ersten Schenkels eine Ausnehmung und in der Schenkelinnenseite des zweiten Schenkels ein der Form der Ausnehmung entsprechender Vorsprung ausgebildet ist, welcher in die Ausnehmung eingreifen kann.

Bevorzugt sind der erste und der zweite Schenkel des pinzettenartig ausgebildeten Bügelelementes gleich lang. In einem unter Einwirkung eines leichten Schließdrucks zustande kommenden Schließzustand des pinzettenartigen Bügelelementes stehen die beiden freien Schenkelenden dieser bevorzugten Ausführungsform miteinander in Kontakt. Beide freien Schenkelenden sind in dem aufgesteckten Bügelendstück aufgenommenen.

Gemäß einer alternativen Ausführungsform, kann der erste Schenkel auch in Richtung einer Hauptachse des Brillenbügels gegenüber dem zweiten Schenkel verlängert sein. Im Schließzustand des pinzettenartigen Bügelelementes steht das freie Schenkelende des zweiten Schenkels dabei mit dem ersten Schenkel in Kontakt und zwar in einem mittleren Abschnitt des ersten Schenkels. Alternativ kann selbstverständlich auch der zweite Schenkel in Richtung der Hauptachse des Brillenbügels gegenüber dem ersten Schenkel verlängert sein. Auch in diesen bevorzugten Ausführungsformen sind beide freien Schenkelenden in dem aufgesteckten Bügelendstück aufgenommen. Insbesondere bevorzugt kann der in Richtung der Hauptachse verlängerte Schenkel dabei einen Auflageabschnitt aufweisen, wobei der Auflageabschnitt mit dem freien Schenkelende vollständig vom Bügelendstück aufgenommen ist. Der Auflageabschnitt des in Richtung der Hauptachse verlängerten Schenkels passt sich dabei dem Bügelendstück an und nimmt beispielsweise die vorgegebene gekrümmte Form des Bügelendstückes an.

Für eine verbesserte Handhabung beim Aufstecken des Bügelendstückes weist jeder der beiden Schenkel an einer Schenkelaußenseite eine Schulter auf, wobei die Schultern einen Anschlag für das aufsteckbare Bügelendstück bilden.

Bevorzugt ist das aufsteckbare Bügelendstück im Wesentlichen hülsenförmig ausgebildet und einseitig verschlossen, wobei das hülsenförmige Bügelendstück eine innere Wandung, eine äußere Umfangsfläche und einen im Wesentlichen runden Querschnitt aufweist. Das der verschlossenen Seite bzw. dem verschlossenen Ende gegenüberliegende offene Ende des hülsenförmigen Bügelendstückes kann vorliegend auch als Einsteckende oder Aufsteckseite betrachtet werden. Insbesondere bei Ausführungsformen, in denen die beiden Schenkel des pinzettenartigen Bügelelementes unterschiedliche Längen aufweisen, ist im Bereich der Aufsteckseite in der inneren Wandung des hülsenförmigen Bügelendstückes vorzugsweise eine vorspringende Schulter ausgebildet, welche eine Anlagefläche für das freie Schenkelende des kürzeren Schenkels darstellt. Das Bügelendstück ist vorzugsweise aus Kunststoff, insbesondere aus einem thermoplastischen Kunststoff oder aus Silikon hergestellt. Alternativ kann das Bügelendstück jedoch auch aus einem Gummi oder aus einem Metall hergestellt sein.

Vorzugsweise besteht jedes Schmuckelement aus einem an einer Halterung befestigten Schmuckstein, vorzugsweise einem geschliffenen Glasstein, einem Strassstein oder einem Edelstein, insbesondere einem Diamanten, wobei in der einen im Wesentlichen H-förmigen Querschnitt aufweisenden Halterung eine umlaufende Nut für den Eingriff der Schenkelinnenseiten des Bügelelementes vorgesehen ist.

Die Erfindung soll nachfolgend anhand von Ausführungsbeispielen im Zusammenhang mit den Figuren näher erläutert werden. Zudem ergeben sich Weiterbildungen, Vorteile und Anwendungsmöglichkeiten der Erfindung auch aus der nachfolgenden Beschreibung der Ausführungsbeispiele und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht. Es wird aber ausdrücklich darauf hingewiesen, dass die Erfindung keinesfalls auf die angegebenen Ausführungsbeispiele beschränkt sein soll. Es zeigen
- Fig. 1: schematisch dargestellt einen Brillenbügel mit Schmuckelementen in seitlicher Ansicht,
- Fig. 2a: schematisch dargestellt eine Ausführungsform eines Bügelelementes des Brillenbügels in seitlicher Ansicht,
- Fig. 2b: einen Schnitt durch ein Schmuckelement,
- Fig. 3: eine Ausführungsform eines Brillenbügels mit dem Bügelelement gemäß der Figur 2a.

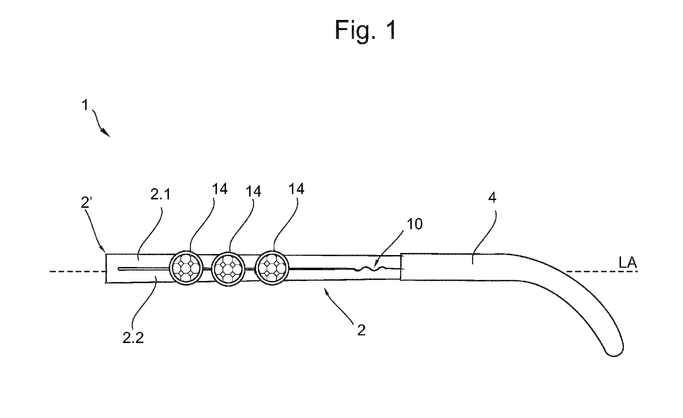

Die Figur 1 zeigt schematisch dargestellt einen Brillenbügel 1 mit aufgenommenen Schmuckelementen 14 in seitlicher Ansicht. Der Brillenbügel 1 besteht aus einem Bügelelement 2 mit aufgenommen Schmuckelementen 14 und einem auf das Bügelelement 2 aufgesteckten Bügelendstück 4, wobei das Bügelelement 2 und das Bügelendstück 4 in Richtung einer Längsachse LA des Brillenbügels 1 längs aneinander anschließen. Das einseitig verschlossene Bügelendstück 4 weist einen im Wesentlichen runden Querschnitt auf und ist hülsenartig ausgebildet. Der verschlossenen Seite bzw. dem verschlossenen Ende gegenüberliegend weist das Bügelendstück 4 ein offenes Ende auf, wobei das Bügelendstück 4 mit diesem auch als Einsteckende bzw. Aufsteckseite zu bezeichnenden offenen Ende voraus auf das Bügelelement 2 aufgeschoben bzw. aufgesteckt wird. Das aufgesteckte Bügelendstück 4 dient unter anderem zur Auflage des Brillenbügels 1 auf dem Ohr eines Brillenträgers. Ein Brillengestell umfasst vorzugsweise zwei derartiger Brillenbügel 1, die entweder direkt oder indirekt seitlich an einem Brillenrahmen angelenkt sind.

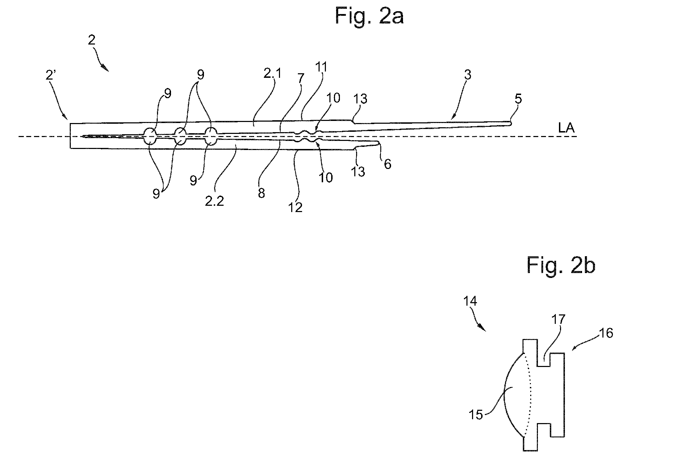

Erfindungsgemäß ist das Bügelelement 2 pinzettenartig ausgebildet und besteht aus einem ersten und einem zweiten Schenkel 2.1, 2.2. Die zwei Schenkel 2.1, 2.2 stehen in einem Verbindungsbereich 2' einseitig, federnd miteinander in Verbindung. Im dargestellten Beispiel ist das aus Metall gefertigte Bügelelement 2 einstückig ausgebildet und ist durch ein spanendes Fertigungsverfahren aus einem Flachmaterial hergestellt. Jeder Schenkel 2.1, 2.2 weist ein dem Verbindungsbereich 2' gegenüberliegendes, freies Schenkelende 5, 6 auf (in der Figur 1 nicht dargestellt, siehe Figur 2a), wobei die freien Schenkelenden 5, 6 in dem Bügelendstück 4 aufgenommen sind. Die Schmuckelemente 14 sind zwischen den beiden Schenkeln 2.1, 2.2 eingeklemmt und werden somit am Brillenbügel 1 fixiert. In dem in der Figur 1 dargestellten Ausführungsbeispiel sind drei einzelne Schmuckelemente 14 zwischen den beiden Schenkeln 2.1, 2.2 des Bügelelementes 2 beispielhaft aufgenommen.

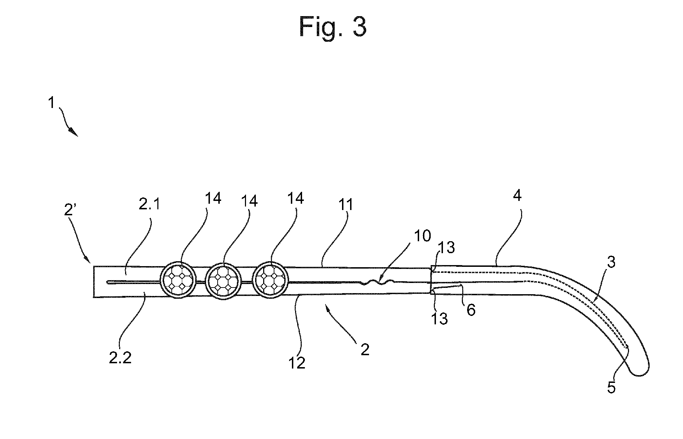

Bei dem in der Figur 2a schematisch dargestellten pinzettenartigen Bügelelement 2 mit einem ersten und einem zweiten Schenkel 2.1, 2.2 ist der erste Schenkel 2.1 im Vergleich zum zweiten Schenkel 2.2 in Richtung der Längsachse LA des Brillenbügels 1 verlängert und weist einen Auflageabschnitt 3 auf. Die beiden Schenkel 2.1, 2.2 sind in einem Verbindungsbereich 2' einseitig miteinander verbunden und verfügen auf der dem Verbindungsbereich 2' gegenüberliegenden Seite jeweils über ein freies Schenkelende 5, 6. Jeder der beiden Schenkel 2.1, 2.2 weist eine Schenkelinnenseite 7, 8 und eine der jeweiligen Schenkelinnenseite 7, 8 gegenüberliegende Schenkelaußenseite 11, 12 auf, wobei die Schenkelinnenseiten 7, 8 der beiden Schenkel 2.1, 2.2 einander zugewandt sind. Durch leichten Druck auf die Schenkelaußenseiten 11, 12 können die beiden Schenkel 2.1, 2.2 aufeinander zu bewegt und das pinzettenartige Bügelelement 2 in einen Schließzustand gebracht werden. Dabei steht das freie Ende 6 des zweiten Schenkels 2.2 mit dem Auflageabschnitt 3 ersten Schenkels 2.1 in Kontakt (siehe Figur 3).

An den Schenkelinnenseiten 7, 8 der beiden Schenkel 2.1, 2.2 sind korrespondierende Eingriffsabschnitte 10 ausgebildet, wobei die korrespondierenden Eingriffsabschnitte 10 im Schließzustand des Bügelelementes 2 wenigstens abschnittsweise derart zum verschiebesicheren Ineinandergreifen ausgebildet sind, dass eine gegenseitige Verschiebung der beiden Schenkel 2.1, 2.2 in Richtung der Längsachse des Brillenbügels 1 verhindert wird. Im dargestellten Beispiel sind die Schenkelinnenseiten 7, 8 im Bereich der Eingriffsabschnitte 10 gewellt ausgebildet, wobei die Wellen im Wesentlichen eine sinuskurvenartige Form aufweisen.

An den einander zugewandten Schenkelinnenseiten 7, 8 sind Ausnehmungen 9 zur Aufnahme der Schmuckelemente 14 ausgebildet, wobei im dargestellten Ausführungsbeispiel jeder Schenkel 2.1, 2.2 an seiner Schenkelinnenseite 7,8 jeweils drei Ausnehmungen 9 aufweist. Die Ausnehmungen 9 sind derart angeordnet, dass sich je zwei Ausnehmungen 9 gegenüberliegen und für die Aufnahme eines Schmuckelementes 14 vorgesehen sind.

Die Figur 2b zeigt einen Schnitt durch ein Schmuckelement 14, welches aus einer Halterung 16 und einem in der Halterung 16 festgelegten Schmuckstein 15, beispielsweise einem geschliffenen Glasstein, einem Strassstein oder einem Edelstein, insbesondere einem Diamanten, besteht. Die vorzugsweise aus Kunststoff oder aus einem Metall hergestellte Halterung 16 weist einen im Wesentlichen H-förmigen Querschnitt mit einer umlaufenden Nut 17 für den Eingriff der Schenkel 2.1, 2.2 des pinzettenartigen Bügelelementes 2 auf.

Zum Einbringen eines Schmuckelementes 14 in das Bügelelement 2 wird jedes Schmuckelement 14 derart von den freien Enden 5, 6 her zwischen die Schenkel 2.1, 2.2 eingeschoben, dass die Schenkelinnenseiten 7, 8 in die umlaufende Nut 17 der Halterung 16 des Schmuckelementes 14 eingreifen. Das Schmuckelement 14 wird in Richtung des Verbindungsbereiches 2' bis zur gewünschten Position weitergeschoben und in Ausnehmungen 9 eingeführt. Dies kann auch als Einrasten der Schmuckelemente 14 in den Ausnehmungen 9 verstanden werden. Durch das Eingreifen der beiden Schenkel 2.1, 2.2 in die umlaufende Nut 17 der Halterung 16 ist jedes Schmuckelement 14 sicher am Bügelelement 2 befestigt und vor einem unerwünschten Herausfallen gesichert. Durch das Einrasten der Schmuckelemente 14 in den Ausnehmungen 9 ist einerseits der durch die Schmuckelemente 14 erzeugte Druck auf die Schenkel 2.1, 2.2 von den Schenkelinnenseiten 7, 8 her nach außen hin verringert, andererseits ist zudem sichergestellt, dass die Schmuckelemente 14 auch in Richtung der Längsachse LA des Brillenbügels 1 nicht selbsttätig oder unerwünscht verrutschen.

In der Figur 3 ist ein Brillenbügel 1 bestehend aus dem Bügelelement 2 der Figur 2a und drei Schmuckelementen gemäß der Figur 2b in seitlicher Ansicht dargestellt. In dem Bügelelement 2 des Brillenbügels 1 sind drei Schmuckelemente 14 aufgenommen, wobei die Schmuckelemente 14 wie oben bereits beschrieben von den freien Schenkelenden 5, 6 her zwischen die Schenkel 2.1, 2.2 eingeschoben werden. Durch leichten Druck auf die Schenkelaußenseiten 11, 12 werden die beiden Schenkel 2.1, 2.2 aufeinander zu bewegt und das pinzettenartige Bügelelement 2 in einen Schließzustand gebracht. Dabei steht das freie Ende 6 des zweiten Schenkels 2.2 mit dem Auflageabschnitt 3 des ersten Schenkels 2.1 in Kontakt. Unter Beibehaltung des leichten Drucks auf die Schenkelaußenseiten 11, 12, nämlich unter weiterer Einwirkung des Schließdrucks wird das Bügelendstück 4, wiederum von den freien Schenkelenden 5, 6 her, auf das Bügelelement 2 aufgesteckt und zwar derart, dass beide freien Schenkelenden 5, 6 sowie der Auflageabschnitt 3 des gegenüber dem zweiten Schenkel 2.2 in Richtung der Längsachse LA verlängerten ersten Schenkels 2.1 von dem Bügelendstück 4 aufgenommen sind. Um zu verhindern, dass das Bügelendstück 4 zu weit auf das Bügelelement aufgeschoben wird und dadurch eventuelle Schäden durch Verbiegungen an einem der beiden Schenkel 2.1, 2.2 verursacht werden, weisen der erste und der zweite Schenkel 2.1, 2.2 an ihren Schenkelaußenseiten 11, 12 für die erleichterte Handhabung jeweils eine Schulter 13 (siehe auch Figur 2a) auf, welche als Anschlag für das Bügelendstück 4 insbesondere für das offene Einsteckende des Bügelendstückes 4 dient. Durch das Aufstecken des Bügelendstückes 4 werden die Schenkel 2.1, 2.2 festgelegt und fixiert. Die zwischen den Schenkeln 2.1, 2.2 aufgenommenen Schmuckelemente 14 befinden sich dadurch im Klemmsitz und sind ebenfalls ausreichend fixiert und gesichert.

Der Auflageabschnitt 3 des gegenüber dem zweiten Schenkel 2.2 in Richtung der Längsachse LA verlängerten ersten Schenkels 2.1 passt sich durch das Aufstecken des Bügelendstückes 4 im Wesentlichen an die vorgegebene Form des Bügelendstückes 4 an und nimmt beispielsweise die zur Auflage auf dem Ohr eines Brillenträgers bevorzugte gekrümmte Form an.

Zum Auswechseln der Schmuckelemente 14 muss zunächst das aufgesteckte Bügelendstück 4 abgenommen bzw. abgezogen werden, wodurch das pinzettenartige Bügelelement 2 durch die federnde Verbindung im Verbindungsbereich 2' selbsttätig in den wie in der Figur 2a dargestellten geöffneten Zustand gelangt. Durch leichtes Auseinanderdrücken der zwei Schenkel 2.1, 2.2 oder aber durch ein unter entsprechender Krafteinwirkung mögliches Herausschieben der Schmuckelemente 14 aus den Ausnehmungen 9 kann das pinzettenartige Bügelelement 2 etwas stärker geöffnet werden, so dass die aufgenommenen Schmuckelemente 14 herausgeschoben und entfernt werden können und gegebenenfalls durch andere ersetzt werden können.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Brillenbügel
- 2: Bügelelement
- 2': Verbindungsbereich
- 2.1: erster Schenkel
- 2.2: zweiter Schenkel
- 3: Auflageabschnitt
- 4: Bügelendstück
- 5: freies Schenkelende des ersten Schenkels
- 6: freies Schenkelende des zweiten Schenkels
- 7: Schenkelinnenseite des ersten Schenkels
- 8: Schenkelinnenseite des zweiten Schenkels
- 9: Ausnehmungen
- 10: korrespondierende Eingriffsabschnitte
- 11: Schenkelaußenseite des ersten Schenkels
- 12: Schenkelaußenseite des zweiten Schenkels
- 13: Schulter
- 14: Schmuckelement
- 15: Schmuckstein
- 16: Halterung

- HA: Hauptachse

## Patentansprüche

1. Brillenbügel (1) zur auswechselbaren Aufnahme von Schmuckelementen (14) aufweisend wenigstens ein Schmuckelement (14), zumindest ein das wenigstens eine Schmuckelement (14) aufnehmendes Bügelelement (2) und ein auf das Bügelelement (2) aufsteckbares Bügelendstück (4), **dadurch gekennzeichnet, dass** das Bügelelement (2) pinzettenartig ausgebildet ist und einen ersten und zweiten Schenkel (2.1, 2.2) aufweist, wobei die Schenkel (2.1, 2.2) in einem Verbindungsbereich (2') freiendseitig, federnd miteinander in Verbindung stehen und jeweils ein dem Verbindungsbereich (2') gegenüberliegendes, freies Schenkelende (5, 6) aufweisen, wobei das wenigstens eine Schmuckelement (14) zwischen dem ersten und zweiten Schenkeln (2.1, 2.2) auswechselbar aufgenommen ist, und zwar durch Einklemmen des wenigstens einen Schmuckelementes (14) zwischen dem ersten und zweiten Schenkel (2.1, 2.2) des pinzettenartigen Bügelelementes (2) durch Zusammenpressen der freien Schenkelenden (5, 6) und Aufstecken des Bügelendstückes (4) auf die beiden freien Schenkelenden (5, 6) der zusammengepressten Schenkel (2.1, 2.2).

2. Brillenbügel (1) nach Anspruch 1, **dadurch gekennzeichnet, dass** durch Aufstecken des Bügelendstückes (4) auf die beiden freien Schenkelenden (5, 6) die Schenkel (2.1, 2.2) festlegbar sind und das zumindest eine Schmuckelement (14) fixierbar ist.

3. Brillenbügel (1) nach Anspruch 1 oder 2, **dadurch gekennzeichnet, dass** die beiden Schenkel (2.1, 2.2) an einander zugewandten Schenkelinnenseiten (7, 8) jeweils wenigstens eine Ausnehmung (9) zur Aufnahme des zumindest einen Schmuckelementes (14) aufweisen, wobei die Ausnehmungen (9) in den Schenkelinnenseiten (7, 8) einander gegenüberliegend angeordnet sind.

4. Brillenbügel (1) nach Anspruch 3, **dadurch gekennzeichnet, dass** die beiden Schenkel (2.1, 2.2) an den einander zugewandten Schenkelinnenseiten (7, 8) jeweils eine Mehrzahl von sich gegenüberliegenden Ausnehmungen (9) zur Aufnahme einer Mehrzahl von Schmuckelementen (14) aufweisen.

5. Brillenbügel (1) nach Anspruch 3 oder 4, **dadurch gekennzeichnet, dass** die Ausnehmungen (9) in den Schenkelinnenseiten (7, 8) im Wesentlichen rund, insbesondere halbkreisförmig ausgebildet sind.

6. Brillenbügel (1) nach Anspruch 3 oder 4, **dadurch gekennzeichnet, dass** die Ausnehmungen (9) in den Schenkelinnenseiten (7, 8) im Wesentlichen rechteckig, insbesondere quadratisch ausgebildet sind.

7. Brillenbügel (1) nach einem der vorhergehenden Ansprüche, **dadurch gekennzeichnet, dass** an den Schenkelinnenseiten (7, 8) der beiden Schenkel (2.1, 2.2) korrespondierende Eingriffsabschnitte (10) vorgesehen sind, wobei die korrespondierenden Eingriffsabschnitte (10) wenigstens abschnittsweise zum verschiebesicheren Ineinandergreifen ausgebildet sind.

8. Brillenbügel (1) nach einem der vorhergehenden Ansprüche, **dadurch gekennzeichnet, dass** der erste Schenkel (2.1) und der zweite Schenkel (2.2) gleich lang sind, wobei in einem Schließzustand des pinzettenartigen Bügelelementes (2) die beiden in dem aufgesteckten Bügelendstück (4) aufgenommenen freien Schenkelenden (5, 6) unter Einwirkung eines leichten Schließdrucks miteinander in Kontakt stehen.

9. Brillenbügel (1) nach einem der Ansprüche 1 bis 7, **dadurch gekennzeichnet, dass** der erste Schenkel (2.1) in Richtung einer Hauptachse (HA) des Brillenbügels (1) gegenüber dem zweiten Schenkel (2.2) verlängert ist, wobei in einem Schließzustand des pinzettenartigen Bügelelementes (2) das in dem aufgesteckten Bügelendstück (4) aufgenommene freie Schenkelende (6) des zweiten Schenkels (2.2) unter Einwirkung eines leichten Schließdrucks mit dem ersten Schenkel (2.1) in Kontakt steht.

10. Brillenbügel (1) nach Anspruch 9, **dadurch gekennzeichnet, dass** der erste in Richtung der Hauptachse (HA) verlängerte Schenkel (2.1) einen Auflageabschnitt (3) aufweist, wobei der Auflageabschnitt (3) mit dem freien Schenkelende (5) vollständig vom Bügelendstück (4) aufgenommen ist.

11. Brillenbügel (1) nach einem der vorhergehenden Ansprüche, **dadurch gekennzeichnet, dass** jeder der beiden Schenkel (2.1, 2.2) an einer Schenkelaußenseite (11, 12) eine Schulter (13) aufweist, wobei die Schultern (13) einen Anschlag für das aufsteckbare Bügelendstück (4) bilden.

12. Brillenbügel (1) nach einem der vorhergehenden Ansprüche, **dadurch gekennzeichnet, dass** das aufsteckbare Bügelendstück (4) im Wesentlichen hülsenförmig ausgebildet und einseitig verschlossen ist, wobei das hülsenförmige Bügelendstück (4) eine innere Wandung, eine äußere Umfangsfläche und einen im Wesentlichen runden Querschnitt aufweist.

13. Brillenbügel (1) nach einem der vorhergehenden Ansprüche, **dadurch gekennzeichnet, dass** jedes Schmuckelement (14) aus einem an einer Halterung (16) befestigten Schmuckstein (15) besteht, wobei in der einen im Wesentlichen H-förmigen Querschnitt aufweisenden Halterung (16) eine umlaufende Nut (17) für den Eingriff der Schenkelinnenseiten (7, 8) vorgesehen ist.

14. Brillengestell umfassend zumindest einem Brillenbügel (1) nach einem der vorhergehenden Ansprüchen.
